# EUROPEAN PATENT SPECIFICATION

(11) **EP 3 314 195 B1**
(45) Date of publication and mention of the grant of the patent: **22.07.2020**
(21) Application number: 16813791.7
(22) Date of filing: 22.06.2016
(51) Int. Cl.: F41G 1/38, G02B 23/16, G01P 15/00

(54) **A METHOD FOR AUTOMATICALLY OPENING A COVER AND A COVER ASSEMBLY**
VERFAHREN ZUM AUTOMATISCHEN ÖFFNEN EINER ABDECKUNG UND ABDECKUNGSANORDNUNG
PROCÉDÉ D'OUVERTURE AUTOMATIQUE DE COUVERCLE, ET ENSEMBLE COUVERCLE

(30) Priority: 25.06.2015 FI 20150191
(43) Date of publication of application: 02.05.2018
(73) Proprietor: Mononen, Jyri, 02360 Espoo (FI); Ruutu, Lauri, 02760 Espoo (FI)
(72) Inventor: Mononen, Jyri, 02360 Espoo (FI); Ruutu, Lauri, 02760 Espoo (FI)
(74) Representative: Boco IP Oy Ab
(86) International application number: PCT/FI2016/050451
(87) International publication number: WO 2016/207487

(56) References cited:
- EP-A1- 1 457 756
- DE-A1-102012 004 104
- DE-A1-102012 004 104
- US-A- 3 746 423
- US-A- 4 596 450
- US-A- 4 596 450
- US-A1- 2005 279 165
- US-A1- 2007 014 547
- US-A1- 2010 095 577
- US-B1- 8 777 620

## Description

### FIELD

The present invention relates to a cover assembly comprising a movable protective cover and method for such a cover assembly.

### BACKGROUND

Protective covers for optical components are used in guns, binoculars and camera lenses, for example, to protect firearm sights, such as riflescopes, or lenses, or other optical components, against rain, snow, vapour (steam), dust, fingerprints, and/or other dirt. Other devices or parts, such as inner sides of barrels, may also be shielded by protective covers. Typically a protective cover can be opened by removing the protective cover by hand, for example by pressing with a thumb an opening button of a flip-open cover or by taking the cover off by hand. A problem with the solutions is that an interesting situation may be missed: many situations occur so quickly that after the cover is removed, the situation is already over. Such quick situations are common when one is stalking or chasing, for example.

EP 1 457 756 and US 4 596 450 both disclose automatically opening lids for riflescopes opening the lid by means of gravity when the rifle is horizontal. DE 10 2012 004104 discloses a riflescope having a cover. This document also mentions the wish that the cover should open automatically when the user is in a shooting position, without specifying the means for such automatic opening.

### BRIEF DESCRIPTION

An object of the present invention is to alleviate the above problem. The object of the invention is achieved by a method and an assembly which are characterized by what is stated in the independent claims. The preferred embodiments of the invention are disclosed in the dependent claims.

The invention is based on the idea of providing an automatic opening mechanism for a protective cover that is movable from a closed position in which the cover protects a part of a device to an open position in which the part is usable, the automatic opening mechanism using action-related information received from one or more sensors to determine whether or not the cover is to be opened.

Thanks to the automatic opening mechanism using action-related information, the protective cover will be opened when the action-related information indicates a need to use a part, such as the riflescope or lenses in binoculars, for example, protected by the cover, without a delay caused by manual opening of the cover.

### BRIEF DESCRIPTION OF THE DRAWINGS

In the following the invention will be described in greater detail by means of preferred embodiments with reference to the attached drawings, in which
Figure 1 illustrates an exemplary assembly;
Figures 2, 3 and 4 are flow charts illustrating exemplary functionalities;
Figure 5 and 6 are charts illustrating information exchange; and
Figure 7 and 8 illustrate some exemplary actions.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any cover assembly comprising at least one movable protective cover for one or more parts of a device, the movable cover in a closed position protecting one or more parts and in an opened position allowing use of one or more parts. Examples of such a cover assembly comprise cover assemblies for guns, riflescopes, camera lenses and binoculars. Examples of parts protectable by such a cover assembly include inner sides of barrels, and different optical components, such as lenses in riflescopes, red dot sights, hand gun scopes, laser scopes, shotgun scopes, range-finders, other telescopic sights, holographic sights, systems of lenses, lenses, objectives, etc. It should be appreciated that the above list is merely an illustrative one and not an extensive, complete list. Further, instead of term "part", any corresponding term, such as a component, piece, element and device, may be used.

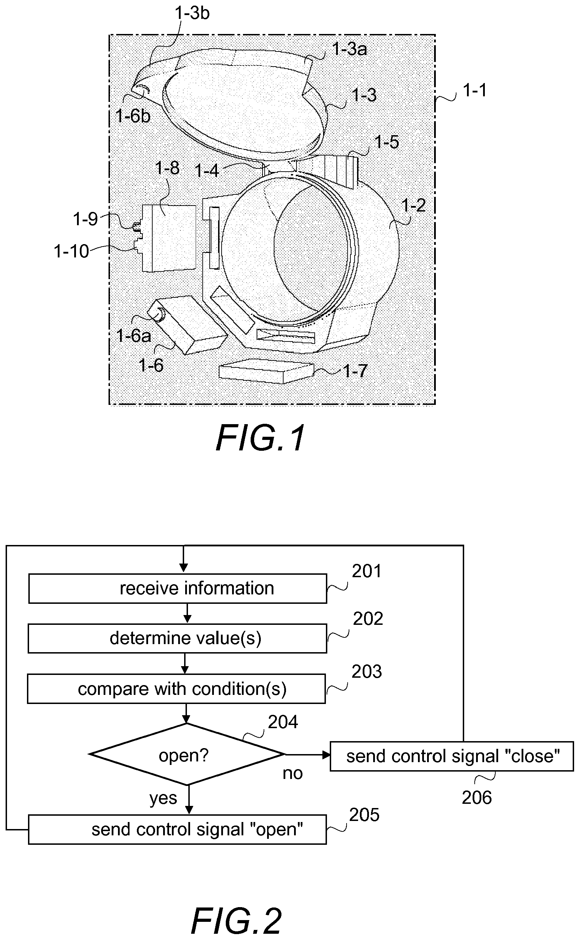

Figure 1 illustrates different means (parts, elements, components) of an exemplary cover assembly 1-1, without restricting the invention to such an assembly. For example, although in the Figure 1 there is illustrated only one piece of each different type of components (means), a cover assembly may comprise one or more components of similar type.

In the example illustrated in Figure 1, the cover assembly 1-1 comprises, as components, a body part 1-2, a cover 1-3, moving means 1-4, a power source 1-5, opening means 1-6, sensor means 1-7, control means 1-8 and adjusting means 1-9, and a power switch 1-10 for turning on or off one or more power consuming components (means) of the cover assembly. At the simplest, a cover assembly comprises the body part 1-2, the cover 1-3, the moving means 1-4, the opening means 1-6, sensor means 1-7 comprising at least one sensor and the control means 1-8. In further embodiments, the cover assembly comprises in addition to the parts in the simplest embodiment the power source 1-5 or the power switch 1-10 or the adjusting means 1-9, or both the power source 1-5 and the power switch 1-10, or both the power source 1-5 and the adjusting means 1-9, or both the power switch 1-10 and the adjusting means 1-9.

It should be appreciated that in any embodiment, the cover assembly 1-1 may comprise also other known or future components, i.e. parts or means that are not illustrated herein for the sake of simplicity. Their functionality is irrelevant for the present invention and therefore not described in detail herein..

The body part 1-2 may be similar with known body parts, or with any future body part. The body part 1-2 may be a separate part, mountable on a device that is to be protected by the cover 1-3, or integrated with the device/apparatus comprising the part. For example, the body part 1-2 may be mounted on a riflescope or be part of a body of the riflescope. The body part 1-2 may be made of any suitable material, such as plastic or aluminium, or any combination of suitable materials.

The cover 1-3 illustrated in Figure 1 is a flip over cover. However, the cover represents herein any type of a protective cover that is movable fastened (fixed, connected) to the body part 1-2 so that the cover is movable from a closed position to an opened position, and vice versa. The movement may be, in relation to the body part, an upward movement, a downward movement, a rotary movement, a turning movement, a retracting movement, a lateral movement and/or a sliding movement or a combination of these movements. In the closed position the cover protects the part, such as an optical component, or the inner side of a barrel, from scratching, rain, snow, sand, steam, moisture, needles, fingerprints and other dirt, for example. The closed position may be called a protective position. In the open position the part is usable to be used for its purpose. For example, the riflescope may be used for aiming, a binocular lens for accurate viewing of distance things, a lens in a camera for taking one or more photos or a video stream. The open position may be called a use position. The cover 1-3 may be similar with known covers, or with any future cover. Further, the cover 1-3 may be made of any suitable material, such as plastic, aluminium, foil, other transparent material, rubber, other flexible material, or any combination of materials. The cover may be called, depending on the part it protects, a riflescope lens protection, objective cap, ocular cap, for example. In the illustrated example, the cover contains two tips 1-3a, 1-3b, one of the tips enabling manual opening of the cover and the other tip 1-3b contains a part 1-6b for a magnetic arrangement utilized in the automatic opening, as will be described below. However, neither of the tips are necessary. For example, the cover assembly may contain other manual means to open the cover 1-3, such as a button or no means to manually open the cover. However, the cover assembly may be without any manual means. The manual means provide a kind of safety net if the automatic opening malfunctions because there is no power, for example. The manual means are useful also when the user wants to open the cover without performing a specific movement with the device the cover is mounted on. Naturally a user may all the time use the manual means if the cover assembly provides such means.

The moving means 1-4 are arranged to move the cover 1-3, or allow the cover 1-3 to be moved, from the closed position to the open position, and vice versa. There are no restrictions to what constitutes the moving means. The moving means 1-4 may be similar with known moving means, or with any future moving means. Examples of moving means 1-4 include spring means arranged between the body and the cover, a motor, a combination of a motor and spring means, means responsive to a magnetic force, a magnet, elastic means that are under tension when in the closed position, a hinge, etc.

In the illustrated example, the power source 1-5 is integrated into the body part 1-2. However, that needs not to be the case: the power source 1-5 may be arranged to be separate from the body part 1-2. Further, instead of a separate power source 1-5 in the cover assembly, a power source in the device, like a riflescope, a gun, a binocular, and a camera, may be used. It suffices that the parts in the cover assembly 1-1 that need electric energy are able to receive it from the power source 1-5. It is also possible that each part needing electric energy comprises its own power source. The power source may be a replaceable battery, a rechargeable battery, or an energy harvester (an element, like a photovoltaic cell, arranged to derive energy from external sources), for example.

The opening means 1-6 are arranged to receive from the control means 1-8 at least an instruction, such as a control signal, to open the cover 1-3, and in response to receiving such an instruction, to cause the cover 1-3 to be opened. Depending on the type of the control means 1-8, and/or the moving means 1-4 of the cover, the opening means 1-6 may further be arranged to receive from the control means 1-8 also an instruction to close the cover 1-3. Any kind of opening means that are configurable to receive an opening instruction/command may be used. Examples of opening means include a motor, a solenoid, an electromagnet, and a servo. The servo may be a positioning servo (servomechanisms) configured to receive in instructions from the control means negative feedback that the servo uses to determine whether or not there is an error in the actual position, for example. The servo may be electrical or partially electronic in nature, using an electric motor as the primary means of creating mechanical force, or use hydraulics, pneumatics, or magnetic principles, as is known to one skilled in the art. The opening means 1-6 may further comprise or be configured to use one or more magnetic arrangements, wherein in each magnetic arrangements magnets or magnetic portions when facing each other keeps the cover in the closed position. If such magnetic arrangement is used, to open the cover 1-3, the opening means 1-6 are configured to change, in response to an "open" instruction, the position of the magnet or magnetic portion so that the magnets do not face each other, and the cover opens. For example, in the example illustrated in Figure 1, the tip 1-3b in the cover 1-3 comprises a magnet 1-6b, or magnet portion that in the closed position is against the magnet 1-6a, or magnet portion in the opening means, or if the opening means are covered by a plug, for example, on the plug. In the magnetic arrangement the magnet 1-6a may be made of ferromagnetic material or be a permanent magnet, or the magnet 1-6a may comprise a permanent magnet or an element made of ferromagnetic material, and the counterpart 1-6b in the cover comprises a "countermagnet" so that in the closed position magnetism between magnets 1-6a, 1-6b facing each other takes care that the cover remains closed. In the illustrated example, where the opening means comprise the servo element, a control signal, like a current signal, received by the servo element, causes the servo element slightly rotate after which the magnets do not face each other anymore. Thus their mutual force cannot hold the cover closed, and the force of the moving means, like the spring means compressed or stretched slightly from rest, or elastic, rubber-like means stretched from rest, arranged between the body and the cover draws the cover from the closed position to the open position. An advantage, especially in a hunting situation, provided by the magnetic arrangement and the servo element, for example, is that it is a silent mechanism to open the cover. For example, in prior art solutions in which the cover is opened by pressing manually a mechanical button, the opening is noisy, and the target animal may here the opening sound, and the situation is lost. Other alternatives include a motor or a solenoid pushing a stick or pin to force the magnets apart, or if the closing means comprise a clutch or latch, for example, the opening means may be arranged to open the clutch or latch. A further example includes rotating, or otherwise moving, by a motor, a hinge so that the rotation/movement of the hinge opens the cover. Further, the opening means 1-6 may be configured, in response to a "close" instruction to close the cover automatically, for example the motor may rotate/move the hinge to opposite direction to close the cover. However, in the illustrated example of Figure 1, the cover has to be closed manually.

In the illustrated example, the cover assembly 1-1 comprises sensor means 1-7 that are configured to send sensed information to the control means 1-8. Further, the sensor means 1-7 may be configured to receive control commands from the control means. The sensor means, or shortly a sensor, is a detecting element, i.e. a sensing device, arranged to detect (sense) some characteristics of its environment, such as events or changes in quantities, and provides a corresponding output. The detected one or more characteristics depend on the type of the sensor and its configuration. Below different examples will be given. It should be appreciated that any kind of a known or future sensor, or combination of different sensors and/or same type of sensors that provide action-related information needed for decision whether or not to open, may be used. Examples of such sensors include an accelerometer, a position sensor, a movement sensor, a pressure sensor and a tactile sensor.

The control means 1-8 are configured to control automatic opening of the cover, as will be described in more detail below with examples illustrated below in Figures 2 to 6. For that purpose, the control means 1-8 comprises one or more receivers, or corresponding interfaces, to receive action-related information, one or more processor, or corresponding computing entities, configured to process the received action-related information, and provide corresponding instructions, program memory and additional memory configured to store at least one condition and possibly at least temporarily some information, like one or more previously calculated values, and one or more transmitters, or corresponding interfaces, to transmit instructions or corresponding information. The control means 1-8 may be a microcontroller that is a small computer on a single integrated circuit containing a processor core, memory, and programmable input/output peripherals. Alternatively, the control means 1-8 may contain a separate microprocessor, memory, and input/output devices. The communication to and from the control means 1-8 may be over the air (i.e. wirelessly), or over a wired connection, such as a data cable. The wireless connection may utilize radio technology as well as other electromagnetic wireless technologies, such as light, magnetic, or electric fields. For example, Bluetooth or Infrared may be used in the wireless communication. Further, to ensure that only the intended recipient receives the wirelessly sent information, pairing of devices, different frequencies, frequency coding and/or encryption of the information, for example, may be used. By implementing the communication wirelessly one avoids loose cables/wires, or shields/covers that are arranged for the cables/wires, thereby maintaining the usability on the same level as with prior art cover assemblies that do not comprise the control means.

In the illustrated example the cover assembly comprises the adjusting means 1-9 configured to send information to the control means. In other words, by means of the adjusting means 1-9, a user may adjust functionality of the control means 1-8, as will be described in more detail below. Examples of an adjusting means 1-9 include a potentiometer, a dual in-line package (DIP) switch, and a toggle switch. Another example includes maintaining user-specific adjustments stored beforehand to the adjusting means, wherein the selection what adjustments are to be used may be performed by pressing a button or using a remote controller with which the user-specific adjustments are associated. It should be appreciated that any other suitable means may be used as well. The adjusting means enable user-specific sensibility control so that the conditions reflect the user's actions, for example movements or force used, in different situations. Hence, unnecessary openings of the cover, or situations in which the cover does not open although the user performed the action in his/her own way, are avoided, or at least minimized.

Although in the example illustrated in Figure 1, the different means are described as separate means, one or more of them may be integrated together. For example, the control means and the sensor means may be integrated together, and/or the opening means and the moving means may be integrated together. Further, although in the example illustrated in Figure 1, the different means are to be detachably inserted into the body part, or alternatively, integrated into the body part, it should be appreciated that one or more of the means may be physically separate from the body part and/or the other means, freely locatable and may locate at a distance to the body part and/or to other means. Preferably a sensor locates so that the user's normal activity (or use) relating to a use situation in which the cover should be opened can be easily detected.

Although in the example illustrated in Figure 1 the cover assembly comprises one o-shaped cover, the cover may have any shape. Further, the cover assembly may be a kind of bikini style cover assembly, in which each cover may have its own control means and sensor means, or there may be common control means and/or sensor means for all or some, at least two, covers. Further, a cover assembly may have a manually openable cover and an automatically opening cover, the manually openable cover being associated with a sensor, so that when the user manually opens the cover, the information sent from the sensor to control means indicate that the cover has been opened, thereby causing the automatically opening cover to open. An example of such cover assemblies includes an assembly comprising one or more covers on both sides of a see-through device, such as a riflescope or binoculars. Further examples include an assembly comprising one or more covers for the riflescope and a cover for the barrel, and an assembly comprising two covers on one side of the binoculars.

In the below examples it is assumed, for the sake of clarity, that the automatic cover assembly will not run out of power.

Figure 2 illustrates an exemplary functionality of the control means. In the illustrated example, it is assumed that the control means are configured, together with the opening means, to open and close the cover.

Referring to Figure 2, action-related information is received in step 201. The action-related information may be sensing results from one or more sensors, or opening information from control means of another cover assembly, for example.

The control means determine in step 202 from the action-related information one or more values, according to the configuration of the control means. For example, if the action-related information is received from another control means, the value determined may be either "closed" or "opened". However, typically the action-related information is received from a sensor, and the one or more values may be determined by calculating it from the received action-related information. Naturally, if the action-related information comprise the value, in the determining step 202 the value is obtained from the received information. Further, the control means may be configured to detect the source of the information, and use the source information to determine the proper way to determine one or more values. For example, if the action-related information is received from an accelerometer, the one or more values are calculated, whereas if the action-related information is received from another control means, the value is determined as disclosed above.

Once the one or more values are determined, the one or more values are compared in step 203 with a condition, or a set of conditions, to determine (step 204), whether the cover should be in the open position or in the closed position. The condition, or the set of conditions, are preferably predefined/preset and stored to the memory. Further, if the control assembly comprises adjusting means a user may adjust the condition, or at least one condition in the set of conditions. The condition to be used may also depend on the source of the information.

In the illustrated example of Figure 2, if the cover should be in the open position (step 204), the control means send in step 205 to the servo a control signal indicating open. If the cover should not be in the open position (step 204), i.e. closed, the control means send in step 206 to the servo a control signal indicating closed. After sending one of the control signals, i.e. either after step 205 or step 206, the process proceeds to step 201 to receive information.

In another example, if the cover should not be in the open position (step 204), the process omits step 206 and returns to step 201 to receive information.

The condition, or set of conditions, may be rather freely defined within limits of the purpose of use. The conditions may be limits or thresholds defined for certain gestures or actions that are deducible from information sensed by one or more sensors. The sensed action-related information may be acceleration, and/or pressure, and/or movement detection, etc. In other words, a condition or a set of conditions may be seen as a parametrization of a gesture or action. For example an action/gesture where a device is moved upwards, may be determined to happen if a received acceleration is more than about 0.5 m/s away from the earth's gravity. The set of conditions may be called a gesture library since they define gesture/action -related conditions. Typically the gesture-related conditions relate to a current position or the magnitude (size) of the change of the position and/or the change speed. It may be that there is only one condition in use, or there are several conditions in use. The set of conditions, or the one condition, is preferably defined so that when the condition is fulfilled, the cover is opened, but that the cover is not opened too early. Hence, the set of conditions may be different for different purposes. For example, the set of conditions may be configured to detect in military use a rapid lift up of the rifle, in hunting to detect when the rifle is taken from the gun sling or from a rifle harness to the shooting position, in shooting sports or in blind hunting to detect when the rifle is set to the horizontal position and back. Further, a condition may be associated to be used with action-related information from a specific sensor or other source, from a group of sensors and/or other sources, or the condition may be used with any action-related information. In addition, there may be user-specific conditions.

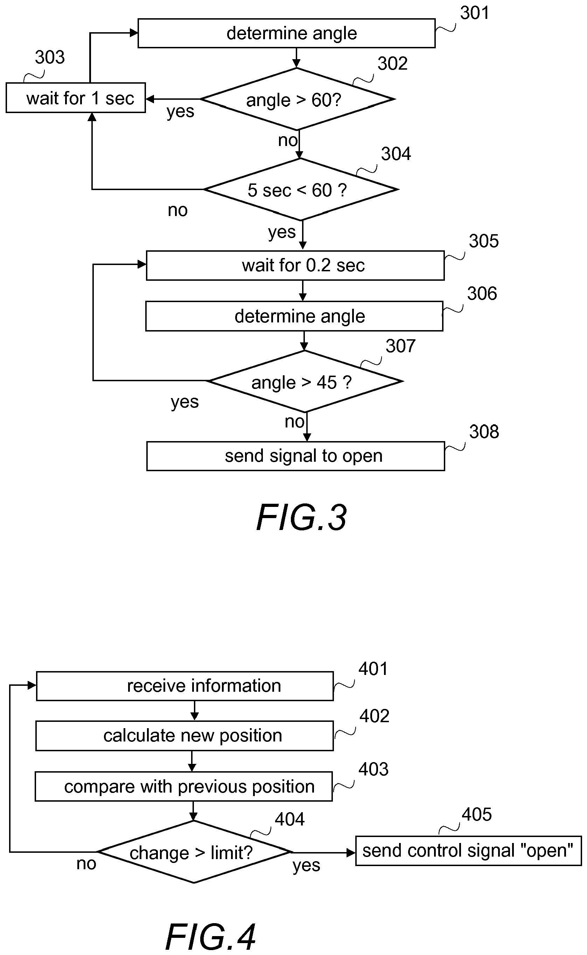

The conditions must be specific enough to avoid gratuitous openings but at the same time general enough to ensure opening when it is needed. For example, the cover of a riflescope should not be automatically opened during transport or during breaks or when the rifle is taken out from a car or from a gun bag, but it should be automatically opened when it is lifted to the shooting position. Sometimes this requires stepwise conditions. An example of such stepwise conditions is illustrated in Figure 3. It should be appreciated that the example is merely for illustrative purposes, and any other limits/conditions and any other amount of different conditions may be used.

In the example illustrated in Figure 3, it is assumed that the control means receive real-time measurements from an accelerometer without any interruptions, and that the control means are configured to process the received information at certain intervals. Hence, receiving the action-related information, i.e. the real-time measurements, is not illustrated in Figure 3, it happens as a background process.

The example illustrated in Figure 3 relates to a use of a rifle that in the initial situation is placed on its side on a hunting table, the cover(s) of the rifle being closed. When a target is detected, the rifle is lifted to a shooting position in which the cover(s) should automatically open.

Referring to Figure 3, the lateral angle is determined in step 301 from the received measurement results. If the lateral angle is more than 60 degrees (step 302), the control means waits in step 303 for one second and then proceeds to step 301 to determine the lateral angle. The lateral angle remaining big enough indicates that the rifle continues to remain on the table.

If the determined lateral angle is not more than 60 degrees (step 302), it is checked in step 304, whether or not the lateral angle has remained five seconds below 60 degrees. If not, the control means proceeds to step 303 to wait for one second.

If the lateral angle has remained five seconds below 60 degrees (304), it indicates that the rifle is on the table and that it has been set there on purpose, and a quicker monitoring is triggered. Therefore the control means waits in step 305 for a shorter time, i.e. 0.2 seconds, before the lateral angle is determined in step 306. If the lateral angle is no more than 45 degrees (step 307), the process returns back to step 305 to wait for 0.2 seconds. If the lateral angle is more than 45 degrees (step 307), the control means send in step 308 to the opening means a signal to open the cover(s).

In the above, the shorter waiting time ensures a quick opening when needed, but the five second check ensures that an accidental quick lifting do not cause the cover(s) to be opened.

As is evident, such a stepwise condition uses less energy since less calculation steps are required and the control means may enter a power save mode between the calculation steps.

Although in the above example, the time interval was decreased when a specific condition was fulfilled, it should be appreciated that the time interval may be also increased.

In addition to using information from a single sensor a combination of different information from different sensors (or from one sensor, if the sensor is a multisensor) may be used as well. The double conditions guarantee that, the cover(s) remain closed until user not only prepares but also takes the decision to use a gun.

Figure 4 illustrates another exemplary functionality of the control means. In the illustrated example, the set of conditions used comprises one condition that defines how big a change in a position is to be interpreted an opening gesture. It should be appreciated that more complex conditions taking into account not only a position, or movement but also a corresponding change, may be used. Further, in the example of Figure 4 it is assumed that the control means are configured, together with the opening means, to open the cover. However, it is a straightforward process for one skilled in the art to implement the exemplary functionality also when the control means are configured to close the cover, too. In the example it is further assumed that the cover is closed when the process starts.

Referring to Figure 4, action-related information is received in step 401. In the illustrated example the action-related information is measurement data received from an accelerometer. There are no restrictions what is received as the measurement data. The measured acceleration may be direct acceleration in an axial direction of the body part or in a direction perpendicular to the axial direction, or a rotatory acceleration over any axis, or their combination. Further, the accelerometer may also measure the position, thereby enabling measuring the relation of three acceleration axis and the gravity.

The new position data is calculated in step 402 from the received measurements, and compared in step 403 with the previous position data. If it is detected in step 404 that the change between the new position and the previous position is smaller than a limit (a threshold), the process returns to step 401 to receive measurement data from the accelerometer. If it is detected in step 404 that the change is bigger than the limit, an indication to open the cover is sent in step 405 to the opening means.

A change may be defined by using the acceleration and time. Such a change may be used for detecting movement's different velocities. For example, a slow lifting up may be decoded as an opening gesture with the following condition: if a velocity about 0.05 m/s continues more than about 1 second, a condition causing opening of the cover(s) is fulfilled. Correspondingly, a rapid lifting up may be decoded as an opening gesture with the following condition: if a velocity of about 1 m/s continues more than about 0.05 second, a condition causing opening of the cover(s) is fulfilled. In the above examples, the values are determined from the measurement results. Yet another example is to calculate the values. For example, the value may be an outcome of a function summing up a certain amount of previous measurement results, or measurement results multiplied by a time interval between two consecutive measurements. For example, the function may calculate a sum of ten newest results of a multiplication of a time interval and acceleration, and the function outcome is then compared to a threshold. Using the above slow and fast lifting examples with a threshold 0.05, and assuming that the time interval remains 0.05 second and that before lifting the acceleration is 0, in the slow lifting up when ten results of 0.05 s x 0,1 m/s are summed (10 x 0.05 x 0.1 = 0.05), the threshold is met, whereas in the rapid lifting (1m/s) the one measurement suffices (9 x 0 + 0.05 x 1 = 0.05) to meet the threshold and causes the cover to be opened.

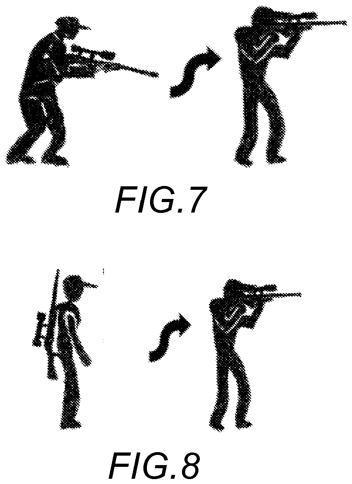

The change threshold may be used for situations disclosed in Figures 7 and 8, for example. In Figure 7, the rifle is first hold on the waist level towards the shooting direction and then the rifle is quickly lifted up on the level of the eyes to the shooting position. In Figure 8, the rifle is first hold on back in the gun sling, the barrel pointing upwards, and then the gun is quickly lifted to the shooting position. In both situations, the quick lifting to the shooting positions should cause the one or more covers to change to the open position. By determining the change, and/or a speed of the change, and/or a direction of a change, and comparing it/them to a threshold, enables, in addition to a more accurate timing of opening the covers, to detect whether the movement is a movement that should cause the cover(s) to be opened. It is also possible to remove the rifle from the gun sling for other purposes, for example to hold on the waist level, but usually that movement is a slower one.

As can be seen from the use example of Figure 7, the automatic opening mechanism provides, in addition to a quick and easy opening, a further advantage: the rifle will be ready to use without losing, as far as usability is concerned, the most appropriate grip on the rifle. The automatic opening mechanism also provides visually less noticeable using of a rifle. At the same time, it is possible to essentially reduce an exposure of the lens for harmful elements, and therefore the lifetime of the riflescope will increase. The same applies naturally to other devices and use situations.

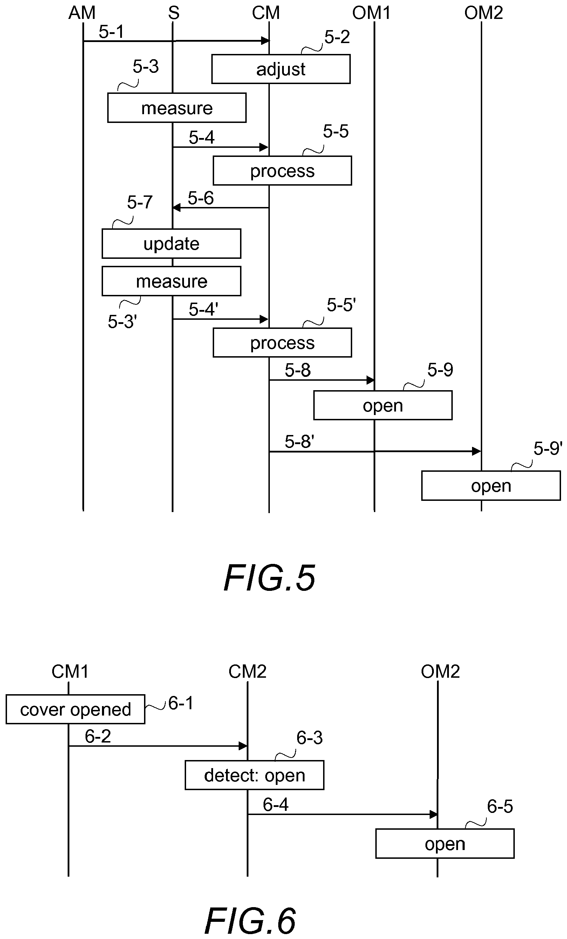

Yet a further example is illustrated with Figure 5. Figure 5 is an information exchange chart illustrating some information exchange between different means (components, elements) of the cover assembly. In the illustrated example it is assumed that the sensor is configured to send measurement results at certain time intervals, the sensor being configurable by the control means to adjust the time interval. Further, in the illustrated example it is assumed that adjustment means are used to provide user-specific adjustment of conditions resulting to user-specific conditions.

Referring to Figure 5, the user takes the device, and adjusts the settings, i.e. the set of conditions. For example, the user may indicate by adjusting means (1-9), for example a potentiometer, that he/she wants to use values that are multiplied by 1.5, for example. Although in the example a common adjustment factor is used, it should be appreciated that the user may define different adjustments to different threshold. This information is sent from the adjusting means AM to the control means CM in message 5-1.

In response to the received information, the control means CM adjusts, such as multiplies, in point 5-2 the threshold values in the set of conditions, and stores them temporarily.

In point 5-3, a sensor S detects that it is time to sense the environment, and performs the measurement. The measurement results are sent to the control means CM in message 5-4.

The control means CM processes in point 5-5 the measurement results and compares them to the conditions. In the illustrated example the control means CM detects that the measurement reporting time interval of the sensor S is to be changed. Therefore the control means CM sends a new time interval to the sensor S in message 5-6. As explained above with Figure 3, the time interval may be decreased or increased. Thanks to that the initial time interval may be set to be a rather long, thereby minimizing use of energy, and when a need arises, the time interval may be decreased, thereby enabling quicker reaction. Alternatively, the initial time interval, or the shortened time interval may be increased. For example, in military applications, if the soldier is crawling, and the gun thereby remains in a tilted or horizontal position, for example, the time interval may be decreased from the initial, for example from one second to 0.01 seconds, whereas when the gun is resting against a wall, i.e. remains in a near vertical position, or remains in one location (i.e. not moving), the time interval may be increased from the initial one second to five seconds, or from 0.01 seconds first to the initial one second and then after a preset time to five seconds, for example. Another example is that if a finger enters the trigger guard, the time interval is decreased, and/or if the finger exits the trigger guard, the time interval is increased.

In response to the received new time interval, the sensor S updates in point 5-7 its measurement reporting time interval correspondingly. Then the sensor S detects (point 5-3') that the time interval has lapsed, performs the measurements and sends the measurement results in message 5-4' to the control means.

The control means CM processes in point 5-5' the measurement results and compares them to the conditions. In the illustrated example the control means CM detects that the conditions relating when to open a cover are fulfilled. In the illustrated example, the control means are controlling two covers, both having their own opening means OM1 and OM2. Therefore an open command (instruction) is sent in messages 5-8 and 5-8' to both opening means OM1 and OM2. It should be appreciated that if there are one opening means or three or more opening means controlled by the control means, the open command is sent to only one, or to three or more opening means. Further, the control means may be configured to send the open command, or corresponding information to another control means. Further, the control means may be configured to send a corresponding command to other means, for example to a light, or its control means, to turn on the light, or to an action camera to start capturing action.

In response to receiving the open command, in the illustrated example, both opening means cause in points 5-9 and 5-9' a corresponding cover to open. For example, in the assembly illustrated in Figure 1, in which a servo is used as the opening means, the servo changes its position thereby moving the magnet in the body part at the same time. Therefore the magnet in the body part does not face the countermagnet in the cover, and the cover opens.

It should be appreciated that the above are only exemplary conditions that may be in the gesture library, and therefore different implementations and conditions are not restricted to the examples.

Still another example is illustrated with Figure 6. Figure 6 is an information exchange chart illustrating some information exchange between different means (components, elements) of two cover assemblies. The two cover assemblies may be mounted on the same device. It should be appreciated that similar principles may be used with three or more cover assemblies.

Referring to Figure 6, the controlling means CM1 of a cover assembly A has determined in point 6-1 that a cover should be opened, or detected that a cover has been manually opened. Therefore the controlling means CM1 sends corresponding information in message 6-2 to the controlling means CM2 of a cover assembly B.

Upon receiving message 6-2, the controlling means CM2 detects in point 6-3 that a cover in the cover assembly A has been opened. Therefore the controlling means CM2 sends in message 6-4 instruction to open a cover to opening means OM2 in the cover assembly B. The opening means OM2 then opens, in point 6-5, the cover. Hence, the covers controlled by different control means are opened in praxis simultaneously.

As is evident from the above, different gestures and actions may be converted to one or more conditions in many ways. Further, the automatic opening is provided in response to a natural reaction of the user in a specific situation, without any additional user input. On the contrary, the user may continue to hold the device in the way that feels natural to him/her, and there is no need to temporary release the grip to open one or more cover(s) either directly by hand or by pressing a separate opening button. In other words, a rifle will be quickly and easily ready to use without the user losing, as far as usability is concerned, the most appropriate grip on the rifle. At the same time, it is possible to essentially reduce an exposure of the lens for harmful elements. Further, in hunting situations the user may maintain the eye contact to the target and the most appropriate shooting position.

The steps, points, messages (i.e. information exchange) and related functions described above in Figures 2 to 6 are in no absolute chronological order, and some of the steps/points may be performed simultaneously or in an order differing from the given one. Other functions can also be executed between the steps/points or within the steps/points, and other information may be sent. Some of the steps/points or part of the steps/point can also be left out or replaced by a corresponding step/point or part of the step/point. Further, the information exchange, or some of it, may be internal information exchange within a component.

The techniques described herein may be implemented by various means so that a cover assembly, or at least one or more control means of a cover assembly, implementing one or more functions described with an embodiment/example, or a combination of embodiments, comprises specific means for implementing the one or more functions described with an embodiment/example and it may comprise separate means for each separate function, or specific means may be configured to perform two or more functions. The specific means may be software and/or software-hardware and/or hardware and/or firmware components (recorded indelibly on a medium such as read-only-memory or embodied in hard-wired computer circuitry) or combinations thereof. Further, codes may be downloadable to the means. For a firmware or software, implementation can be through modules (e.g., procedures, functions, and so on) that perform the functions described herein.

It will be obvious to a person skilled in the art that, as the technology advances, the inventive concept can be implemented in various ways. The invention and its embodiments are not limited to the examples described above but may vary within the scope of the claims.

## Claims

1. A method for automatically opening a cover (1-3) that is movable from a closed position to an open position, wherein in the closed position the cover protects a lens of riflescope or a lens of other optical aiming device or inner side of a barrel and in the open position the lens or the barrel is usable, **characterized by** the method comprising:
receiving in control means (1-8) action-related information from at least one acceleration sensor (1-7); and recognizing application-specific gestures by the control means by calculating acceleration values from the action-related information or acceleration values from the action-related information combined with other values from other sources;
determining, by the control means, from the action-related information whether or not to open the cover; and
if the cover is to be opened, sending an indication to open the cover from the control means to opening means that are arranged to open the cover.

2. A method according to claim 1 to automatically open at least a second cover by detecting that the first cover has or is to be opened.

3. A method according to claim 1 for enhancing overall functionality and efficiency by automatically adjusting measuring length and/or measuring interval and/or measuring sensitivity of sensor means by the control means ac-cording to predefined conditions.

4. A method according to claim 1 wherein the control means (1 -8) are further configured to determine from the action-related information whether or not to close the cover and send an indication to close at least one cover (1 -3).

5. A cover assembly (1 -1) comprising:
a body part (1 -2);
at least one cover (1 -3) fastened to the body part (1 -2) and arranged to be moved from a closed position to an open position, wherein in the closed position the cover (1 -3) protects a lens or a barrel and in the open position the lens or the barrel is usable; control means (1 -8) arranged to implement a method according to claim 1, 2, 3, or 4; acceleration sensor means (1 -7) arranged to be in a communication connection with the control means (1 -8) and to send measured information to the control means (1 -8); and
opening means (1 -6, 1 -6a, 1 -6b) arranged to receive indications from the control means (1 -8) and in response to an indication to open at least one cover (1 -3) or to cause at least one cover (1 -3) to be opened.

6. A cover assembly (1 -1) according to claim 5 further comprising a magnet arrangement comprising a first magnet (1 -6a, 1 -6b) and as a counterpart a second magnet (1 -6a, 1 -6b) or an element of ferromagnetic material, wherein the opening means (1 -6) are configured to move either the first magnet or the counterpart to open at least one cover.

7. A cover assembly (1 -1) according to claim 5, further comprising at least a second lens cover for the protected device and at least a second control means wherein the two or more control means are configured to exchange information relating to opening lens covers.

## Patentansprüche

1. Verfahren zum automatischen Öffnen einer Abdeckung (1-3), die von einer geschlossenen Stellung zu einer offenen Stellung bewegt werden kann, wobei die Abdeckung in der geschlossenen Stellung ein Objektiv eines Zielfernrohrs oder ein Objektiv einer anderen optischen Zielvorrichtung oder eine Innenseite eines Laufs schützt und in der offenen Stellung das Objektiv oder der Lauf verwendbar ist, **dadurch gekennzeichnet, dass** das Verfahren umfasst:
in Steuerungsmitteln (1-8): Empfangen von aktionsbezogenen Informationen aus mindestens einem Beschleunigungssensor (1-7); und
durch die Steuerungsmittel: Erkennen anwendungsspezifischer Gesten durch Berechnen von Beschleunigungswerten aus den aktionsbezogenen Informationen oder von Beschleunigungswerten aus den aktionsbezogenen Informationen in Kombination mit anderen Werten aus anderen Quellen;
durch die Steuerungsmittel: Bestimmen anhand der aktionsbezogenen Informationen, ob die Abdeckung zu öffnen oder nicht zu öffnen ist; und
falls die Abdeckung zu öffnen ist, Senden eines Hinweises zum Öffnen der Abdeckung von den Steuerungsmitteln zu Öffnungsmitteln, die zum Öffnen der Abdeckung eingerichtet sind.

2. Verfahren nach Anspruch 1 zum automatischen Öffnen mindestens einer zweiten Abdeckung durch Erkennung, dass die erste Abdeckung geöffnet hat oder zu öffnen ist.

3. Verfahren nach Anspruch 1 zur Verbesserung der Gesamtfunktionalität und Effizienz durch das automatische Verstellen einer Messlänge und/oder eines Messintervalls und/oder einer Messempfindlichkeit von Sensormitteln durch die Steuerungsmittel gemäß vorherbestimmten Bedingungen.

4. Verfahren nach Anspruch 1, wobei die Steuerungsmittel (1-8) ferner dazu ausgelegt sind, anhand der aktionsbezogenen Informationen zu bestimmen, ob die Abdeckung zu schließen oder nicht zu schließen ist, und einen Hinweis zum Schließen mindestens einer Abdeckung (1-3) zu senden.

5. Abdeckungsanordnung (1-1) umfassend:
einen Körperteil (1-2);
mindestens eine Abdeckung (1-3), der am Körperteil (1-2) befestigt ist und so eingerichtet ist, dass er von einer geschlossenen Stellung zu einer offenen Stellung bewegt wird, wobei die Abdeckung (1-3) in der geschlossenen Stellung ein Objektiv oder einen Lauf schützt und in der offenen Stellung das Objektiv oder der Lauf verwendbar ist;
ein Steuerungsmittel (1-8), das dazu eingerichtet ist, ein Verfahren nach Anspruch 1, 2, 3 oder 4 zu realisieren;
Beschleunigungssensormittel (1-7), die so eingerichtet sind, dass sie mit dem Steuerungsmittel (1-8) in kommunikativer Verbindung stehen und gemessene Informationen an das Steuerungsmittel (1-8) senden; und
Öffnungsmittel (1-6, 1-6a, 1-6b), die dazu eingerichtet sind, Hinweise vom Steuerungsmittel (1-8) zu empfangen und in Reaktion auf einen Hinweis mindestens eine Abdeckung (1-3) öffnen oder das Öffnen mindestens einer Abdeckung (1-3) veranlassen.

6. Abdeckungsanordnung (1-1) nach Anspruch 5, die ferner eine Magnetanordnung umfasst, die einen ersten Magneten (1-6a, 1-6b) und als Gegenstück einen zweiten Magneten (1-6a, 1-6b) oder ein Element aus einem ferromagnetischen Material aufweist, wobei die Öffnungsmittel (1-6) dazu ausgelegt sind, zum Öffnen der mindestens einen Abdeckung entweder den ersten Magneten oder das Gegenstück zu bewegen.

7. Abdeckungsanordnung (1-1) nach Anspruch 5, die ferner mindestens eine zweite Objektivabdeckung für die geschützte Vorrichtung und mindestens ein zweites Steuerungsmittel umfasst, wobei die zwei oder mehr Steuerungsmittel dazu ausgelegt sind, Informationen bezüglich des Öffnens von Objektivabdeckungen auszutauschen.

## Revendications

1. Procédé pour ouvrir automatiquement un couvercle (1-3) qui peut être amené d'une position fermée à une position ouverte, dans lequel, dans la position fermée, le couvercle protège une lentille d'une lunette de visée ou une lentille d'un autre dispositif de visée optique ou le côté intérieur d'un canon, et, dans la position ouverte, la lentille ou le canon est utilisable, **caractérisé en ce que** le procédé comprend les étapes consistant à :
recevoir, dans des moyens de commande (1-8), des informations relatives à une action en provenance d'au moins un capteur d'accélération (1-7) ; et
détecter des gestes spécifiques à l'application par les moyens de commande en calculant des valeurs d'accélération à partir des informations relatives à une action ou des valeurs d'accélération à partir des informations relatives à une action en combinaison avec d'autres valeurs venant d'autres sources ;
déterminer, par les moyens de commande, à partir des informations relatives à une action s'il faut ou non ouvrir le couvercle ; et
s'il faut ouvrir le couvercle, envoyer une indication pour ouvrir le couvercle depuis les moyens de commande à des moyens d'ouverture qui sont disposés de manière à ouvrir le couvercle.

2. Procédé selon la revendication 1 pour ouvrir automatiquement au moins un deuxième couvercle par la détection que le premier couvercle vient d'être ou va être ouvert.

3. Procédé selon la revendication 1 pour améliorer la fonctionnalité et l'efficacité globales par l'ajustement automatique d'une longueur de mesure et/ou d'un intervalle de mesure et/ou d'une sensibilité de mesure de moyens capteurs par les moyens de commande selon des conditions prédéfinies.

4. Procédé selon la revendication 1, dans lequel les moyens de commande (1-8) sont également configurés pour déterminer à partir des informations relatives à une action s'il faut ou non fermer le couvercle et envoyer une indication pour fermer au moins un couvercle (1-3).

5. Agencement de couvercle (1-1) comprenant :
une partie de corps (1-2);
au moins un couvercle (1-3) fixé à la partie de corps (1-2) et agencé pour être amené d'une position fermée à une position ouverte, ledit couvercle (1-3), dans la position fermée, protégeant une lentille ou un canon et, dans la position ouverte, ladite lentille ou ledit canon étant utilisable ;
un moyen de commande (1-8) agencé pour réaliser un procédé selon la revendication 1, 2, 3 ou 4 ;
des moyens capteurs d'accélération (1-7) agencés pour être en liaison communicative avec le moyen de commande (1-8) et envoyer des informations mesurées au moyen de commande (1-8) ; et
des moyens d'ouverture (1-6, 1-6a, 1-6b) agencés pour recevoir des indications venant du moyen de commande (1-8) et, en réaction à une indication, ouvrir au moins un couvercle (1-3) ou faire ouvrir au moins un couvercle (1-3).

6. Agencement de couvercle (1-1) selon la revendication 5, comprenant également un agencement magnétique comprenant un premier aimant (1-6a, 1-6b) et, en tant que contre-élément, un deuxième aimant (1-6a, 1-6b) ou un élément d'un matériau ferromagnétique, lesdits moyens d'ouverture (1-6) étant configurés pour déplacer ou le premier aimant ou le contre-élément afin d'ouvrir au moins un couvercle.

7. Agencement de couvercle (1-1) selon la revendication 5, comprenant également au moins un deuxième couvercle de lentille pour le dispositif protégé et au moins un deuxième moyen de commande, lesdits deux ou plus de deux moyens de commande étant configurés pour échanger des informations relatives à l'ouverture des couvercles de lentille.
